# EUROPEAN PATENT APPLICATION

(11) **EP 3 339 008 A1**
(43) Date of publication of application: **27.06.2018**
(21) Application number: 16205999.2
(22) Date of filing: 21.12.2016
(51) Int. Cl.: B29D 11/00, G02B 1/08, G02B 1/10, G02C 7/12

(54) **METHOD FOR PRODUCING A POLARIZER AND AN OPTICAL LENS**

(71) Applicant: Carl Zeiss Vision International GmbH, 73430 Aalen (DE)
(72) Inventor: RYAN, Ben, Port Noarlunga South,, South Australia 5167 (AU); BROWN, Stephen, Morphett Vale, Adelaide,, South Australia 5162 (AU)
(74) Representative: Louis Pöhlau Lohrentz

(57) **Abstract**

A method for producing a polarizer (2) having a stepped or continuous gradient of polarization, said method comprising the following steps: (a) providing at least one polarizer (2) comprising a substrate and at least one polarizing agent, and (b) contacting said at least one polarizer (2) at least partially with at least one reducing agent (6), said at least one reducing agent (6) being reactive with said at least one polarizing agent to provide at least one reduced polarizing agent. A method for producing an optical lens (1), and to an optical lens (1).

## Description

The present invention relates to an optical lens, preferably a spectacle lens, comprising at least one polarizer having a stepped or continuous gradient of polarization and to a method for producing a polarizer having a stepped or continuous gradient of polarization as well as to a method for producing an optical lens comprising at least one polarizer having a stepped or continuous gradient of polarization.

A polarizer is an optical filter that lets light waves of a specific polarization pass and blocks light waves of other polarizations. A polarizer can convert a beam of light of undefined or mixed polarization into a beam of well-defined polarization that is polarized light. The common types of polarizers are linear polarizers and circular polarizers. Polarizers are used in many optical techniques and instruments, and polarizing filters find applications in photography, liquid crystal display technology, optical lenses, such as spectacle lenses as, for example, sunglass lenses.

Polarizers are often used with spectacles such as sunglasses in order to reduce glare which is induced, for example, by reflections of light of horizontal surfaces such as car windscreen, sand, water, snow, asphalt roads, etc., which reduces visibility. In cars, airplanes, etc., polarized displays are often used. Consequently, the light emitted from polarized displays is also filtered out by a polarizer arranged on a spectacle. In order to solve this problem, spectacles are provided having a gradient of polarization, wherein the upper part of the spectacle has polarizing properties and the lower part of the spectacle does not have polarizing properties. Thus, a wearer can look into the distance through the upper part of the spectacle comprising a polarizer and at close range, for example, to the polarized display, through the lower part of the spectacle having no or reduced polarizing properties.

Linear polarizers can be divided in two general categories namely absorptive polarizers where the unwanted polarization states are absorbed by a device and beam-splitting polarizers where the unpolarized beam is split into two beams with opposite polarization states.

A well known absorptive polarizer is the so called "polaroid" invented in 1938 by Edwin H. Land and which is a polyvinyl alcohol (PVA) polymer impregnated with iodine. During manufacture, the PVA polymer chains are stretched such that they form an array of aligned, linear molecules in the material. The iodine dopant attaches to the PVA molecules and makes them conducting along the length of the chains. Light polarized parallel to the chains is absorbed, and light polarized perpendicular to the chains is transmitted. This PVA polymer impregnated with iodine is also called H-sheet polarizer. Another type of polaroid is the K-sheet polarizer, which consists of aligned polyvinylene chains.

US 4,181,756 is directed to a process for increasing display brightness of liquid crystal displays on an alpha-numeric display by bleaching sections of a planar polarizer using screen-printing techniques. According to this method selected areas of the planar polarizer are screen-printed with a gel containing a substance which will bleach the polarizer dye. The gel contains an alkali-bleaching agent and must have a consistency making it silk-screenable to form an accurate pattern with clearly-defined edges. This method is used for bleaching a polarizer in place on an alpha-numeric display such that polarizing areas remain only over the transparent electrically-conductive portions of the display and are accurately registered therewith.

The method according to US 4,181,756 does not allow to provide a polarizer having a stepped or continuous gradient of polarization. Moreover, this method does not allow treating polarizers which are not planar and have, e.g., a curved shape.

US 2016/0299272 A1 is directed to a method for producing a polyvinyl alcohol-based polarizer dyed with at least one of iodine and dichroic dye. The polyvinyl-alcohol based film is crosslinked with a crosslinking agent being boric acid. The dyed and crosslinked polyvinyl alcohol-based polarizer is contacted with a bleaching solution containing a strong basic compound. Upon contact of the strong basic compound with the polarizing film, the crosslinking bond of the boric acid and polyvinyl alcohol is destroyed so that the iodine or dye is released. The method according to US 2016/0299272 A1 does not allow to provide a polarizer having a stepped or continuous gradient of polarization. Moreover, the harsh conditions to be applied in the alkali-based bleaching process impair the dimensional stability of the polarizer which may lead to a distortion of the polarizer.

US 2016/0299271 A1 discloses a method for manufacturing a polarizing element which includes locally bleached areas. This method comprises the formation of a mask layer including at least one punched area on one surface of the polarizing element. The polarizing element is subsequently partially bleached by immersing the partially masked element into a bleaching solution. The method according to US 2016/0299271 A1 does not allow to provide a polarizer having a stepped or continuous gradient of polarization.

US 5,925,289 is directed to a method for making a synthetic dichroic light polarizer wherein a light polarizing sheet is irradiated with linearly polarized ultraviolet light at an intensity and duration sufficient to effect bleaching of the light-polarizing sheet. Depending on the nature of the base polarizer material being treated, the bleaching can take from several minutes to several hours when employing the commonly used UV-irradiation sources. In order to improve the rate of bleaching, usually rate accelerating additives such as photosensitizers and photooxidizers are to be included into the polarizer material. The process of US 5,925,289 is complex.

US 2008/0094549 A1 discloses a dye-type polarizing film or polarizing plate containing an azo compound or a salt thereof in a substrate of the polarizing film. US 2008/0094549 A1 does not disclose a process for bleaching of polarizing agents.

US 2007/0052918 A1 discloses a pair of sunglasses having a polarized upper portion and a non-polarized lower portion.

US 2015/0116658 A1 discloses a method for fabricating sunglasses wherein the front portion of polarized lenses are overlain with an optical retarder to depolarize impinging polarized light. The use of an additional retarder is cumbersome.

US 2015/0253465 A1 discloses a method for providing sunglass lenses with a predetermined optical gradient wherein an oriented sheet is printed with dichroic dyes or iodine dyes in which the density of the deposited dye varies in a predetermined manner using ink jet printing. This method is technically complex.

US 2015/0261011 A1 discloses a method and apparatus for preparing a gradient polarization sheet, wherein a web of molecular oriented material is conducted into a bath of dye that has dye molecules that associate with the molecularly oriented molecules in the web. The web is progressively immersed in the dye bath so that a transverse dye gradient is produced in the web that is a function of the residence time of the various portions of the web in the dye bath. This method is limited regarding the use of dye molecules which are to associate with the web material.

EP 3 072 672 A1 discloses a method for producing a polarized eyewear wherein a polarizing film, comprising a substrate and a polarizing dye, is dipped into a solvent to dissolve polarizing agent from the polarizing film. A graded polarization may be produced by varying the depth of immersion during said dipping step. In order improve removal of the polarizing agent the solvent may be ultrasonically moved relative to the polarizing agent. An oxidizing agent may be added to the solvent to neutralize the polarizing agent. Although the method disclosed in EP 3 072 672 A1 is acceptable, it has turned out, that there is a need for a more efficient neutralization of a polarizing agent contained in a polarizing film for creating a graded polarization.

It is an object of the present invention to provide a method for producing a polarizer having a stepped or continuous gradient of polarization.

It is another object of the present invention to provide a method for producing an optical lens, preferably a polarized spectacle lens, wherein the optical lens comprises a polarizer having a stepped or continuous gradient of polarization.

Moreover, it is an object of the present invention to provide an optical lens, preferably a spectacle lens, comprising at least one polarizer having a stepped or continuous gradient of polarization.

The object underlying the present invention is solved by providing a method for producing a polarizer having a stepped or continuous gradient of polarization, said method comprising the following steps:
(a) providing at least one polarizer comprising a substrate and at least one polarizing agent,
(b) contacting said at least one polarizer at least partially with at least one reducing agent, said at least one reducing agent being reactive with said at least one polarizing agent to provide at least one reduced polarizing agent.

Prior to contacting the polarizer at least partially with said at least one reducing agent, the polarizing agent is preferably uniformly distributed in and/or on said substrate, i.e., the at least one polarizing agent is preferably uniformly distributed in said polarizer.

The continuous or stepped gradient of polarization is created by the at least partial contact of the polarizer, in particular of the polarizing agent, with the at least one reducing agent. Due to the partial contact with the polarizer comprising at least one reducing agent, the polarizing agent is partially reduced, leading to a continuous or stepped gradient of polarization. The step of reducing the polarizing agent can also be designated as bleaching or bleaching step.

Preferably, said at least one reduced polarizer is removed to a large extent, still preferably substantially, from said polarizer. The removal of the reduced polarizing agent(s) from said polarizer can be effected simultaneously during the action of the at least one reducing agent on the polarizing agent(s) in step (b). The step of removing the reduced polarizing agent can also be designated as leaching or leaching step.

Of course, the step of reducing partially the polarizing agent(s) and the step of removing the reduced polarizing agent(s) from the polarizer can also be effected subsequently, e.g., in separate steps. According to a preferred embodiment of the method of the invention, the chemical reduction of part of the polarizing agent(s) and the removal of the reduced polarized agent(s) from the polarizer are effected in a combined step or single step.

According to a particular preferred embodiment the gradient of polarization is a continuous gradient of polarization.

According to another preferred embodiment, the gradient of polarization can also be a stepped gradient of polarization.

According to another preferred embodiment, the polarization is a linear polarization.

Preferred embodiments of the method are recited in dependent claims 2 through 11.

The object of the present invention is also solved by providing a method for producing an optical lens, preferably a spectacle lens, further preferably a polarized spectacle lens, wherein a polarizer having a stepped or continuous gradient of polarization obtained according to the method of any one of claims 1 to 11 is arranged on or in an optical lens body, preferably a spectacle lens body.

The object of the present invention is also solved by providing an optical lens, preferably a spectacle lens, further preferably a polarized spectacle lens, comprising at least one polarizer having a stepped or continuous gradient of polarization, wherein said polarizer comprises at least one polarizing agent in or on a substrate wherein said at least one polarizing agent is present both as reduced polarizing agent and as unreduced polarizing agent in or on said substrate.

Preferred embodiments of the optical lens are recited in dependent claims 14 and 15.

The object of the invention is also solved by provision of a spectacle, preferably a polarized spectacle, e.g. sunglasses, comprising an optical lens according to any one of claims 13 to 15.

According to the method of the invention a polarizer comprising a substrate and at least one polarizing agent is contacted at least partially with a reducing agent. This at least one reducing agent is reactive with the at least one polarizing agent located in and/or on the substrate. The reducing agent leads to a chemical reduction of the at least one polarizing agent resulting in at least one reduced polarizing agent.

By "reduced polarizing agent" it is meant according to the invention that the polarizing agent is chemically reduced by a chemical reducing agent.

The chemical reduction of the at least one polarizing agent alters properties of the at least one polarizing agent.

According to another embodiment of the method of the present invention, said method further comprises in step (b) that
(i) said at least one reduced polarizing agent has a higher solubility in a solvent compared to an unreduced polarizing agent in said solvent, and/or
(ii) said at least one reduced polarizing agent has less or no polarizing properties compared to an unreduced polarizing agent.

According to this preferred embodiment of the invention the at least one reduced polarizing agent has a higher solubility in a solvent compared to an unreduced polarizing agent in said solvent.

The term "solvent" as used in the present inventions means a single solvent or a plurality of solvents such as a solvent mixture, unless otherwise stated. The term solvent also means organic solvent(s), water, or aqueous solvent(s), i.e. a mixture of water and organic solvent or a mixture of water and a plurality of organic solvents.

According to a preferred embodiment, said solvent is water having preferably a temperature in range from 25°C to 75°C, further preferred from 40°C to 70°C, still further preferred from 50°C to 68°C, still further preferred from 60°C to 65°C, still further preferred from 61°C to 64°C.

It turned out surprisingly that the reduced polarizing agent, preferably reduced dichroic dye(s), have an increased solubility compared to the unreduced polarizing agent, wherein said increased solubility can be used to efficiently remove the reduced polarizing agent, preferably reduced dichroic dye(s), from the polarizer. The method of the present invention allows selectively removing reduced polarizing agent(s) from parts of a polarizer and, thus, to create a stepped or continuous gradient of polarization which can also be designated as graded polarization.

According to another embodiment of the invention the at least one reduced polarizing agent has less or no polarizing properties compared to an unreduced polarizing agent. If as polarizing agent a dichroic dye is used, the reduced dichroic dye can be a colorless, e.g., a leuco form.

According to another embodiment of the invention the at least one reduced polarizing agent, such as reduced dichroic dye(s), has a higher solubility in a solvent compared to an unreduced polarizing agent in said solvent and additionally the at least one reduced polarizing agent, such as reduced dichroic dye(s), has less or no polarizing properties compared to an unreduced polarizing agent, such as unreduced dichroic dye(s). More preferably, the reduced polarizing agent, such as reduced dichroic dye(s), is colorless.

According to a preferred embodiment of the invention, the at least partially contacting of the at least one polarizer with the at least one reducing agent means preferably an at least partially spatial, temporal or spatio-temporal contact.

By contacting the at least one polarizer at least partially, preferably at least partially spatially, temporally or spatio-temporally, with at least one reducing agent is meant that the area or surface of the at least one polarizer is not contacted or treated uniformly with the at least one reducing agent but regionally differently and/or regionally with a different intensity.

The spatial or regional extension of the contact with the at least one reducing agent can be effected by varying the immersion depth of the polarizer, for example, into a fluid containing the at least one reducing agent. The polarizer can also be repeatedly immersed into the fluid with the at least one reducing agent wherein the immersion depth and/or duration is continuously or discontinuously increased or reduced so that different areas of the polarizer are contacted with the at least one reducing agent with an increasing or decreasing intensity, respectively.

When continuously varying the immersion depth and/or duration, a continuous gradient of polarization can be created.

When discontinuously varying the immersion depth and/or duration, a stepped gradient of polarization can be created.

A continuous gradient of polarization means that the gradient does not contain a discontinuous change of polarization. The gradient, however, can be realized as a steep increase or a gentle increase. The gradient of the polarizer can be continuous from 0 % to 100 % polarization, preferably from 1% to 99 % polarization, further preferred from 5 % to 95 % polarization, further preferred from 10 % to 90 % polarization, still further preferred from 20 % to 85 % polarization, still further preferred from 25 % to 80 % polarization. In this context 100 % polarization means that no polarizing agent is reduced, and 0 % polarization means that essentially all, preferably all, polarizing agent is reduced. The polarization is measured at the polarizer comprising the at least one polarization agent and the substrate.

A stepped gradient of polarization means that the gradient contains a discontinuous change of polarization. A polarizer having a stepped gradient can mean that the polarizer has an area with no polarization and an area with polarization. According to a preferred embodiment of the invention a stepped gradient comprises three or more steps, preferably four or more steps, further preferred five or more steps with different levels of polarization. According to another embodiment of the invention the gradient contains up to seven steps, preferably up to eight steps, further preferred up to nine steps, still further preferred up to ten steps with different levels of polarization. For example, the polarizer may contain steps of polarization wherein the difference between adjoining steps amount to 20 %, 10 % or 5 % of polarization. According to a preferred embodiment the difference between adjoining steps amount to 10 % or 5 % of polarization. In this context 100 % polarization means that no polarizing agent is reduced, and 0 % polarization means that essentially all, preferably all, polarizing agent is reduced. The polarization is measured with the polarizer comprising the at least one polarization agent and the substrate.

The level of polarization can be measured with a polarimeter or ellipsometer known in the art.

By varying the immersion depth and/or immersion duration of the polarizer, e.g., into a fluid containing the at least one reducing agent, the intensity of action of the reducing agent on the polarizing agent can be increased or decreased, respectively. If the partial, preferably partially spatial, temporal or spatio-temporal, contact of the polarizer with the at least one reducing agent is increased, the amount of reduced polarizing agent(s) is increased. If the partial, preferably spatial, temporal or spatio-temporal, contact of the polarizer with the at least one reducing agent is decreased, the amount of reduced polarizing agent(s) is decreased.

It is of course possible to combine area(s) having a continuous polarization with area(s) having a stepped polarization within a polarizer.

That is to say, by varying the partial, preferably partially spatial, temporal or spatio-temporal, contact of the at least one polarizer with the at least one reducing agent, a stepped or continuous gradient of polarization in said polarizer can be specifically created.

Preferably the at least one reducing agent, preferably one reducing agent, is contained in a solvent or mixture of solvents. By chemically reducing the at least one polarizing agent of the polarizer, comprising a substrate and at least one polarizing agent, the solubility of the at least one reduced polarizing agent(s) may be increased compared to the respective solubility of the respective unreduced polarizing agent(s) in said solvent or solvent mixture.

By contacting said polarizer comprising unreduced polarizing agent(s) and reduced polarizing agent(s) with a solvent or solvent mixture, preferably water having preferably an increased temperature in a range between 25° and 75°C, once or repeatedly, a stepped or continuous gradient of polarization in the polarizer is created by leaching the reduced polarizing agent(s) to a larger extent than the unreduced polarizing agent(s).

According to another embodiment of the invention, the at least one reduced polarizing agent has less or no polarizing properties compared to an unreduced polarizing agent. That is to say, a stepped or continuous gradient of polarization can be produced in a similar way by contacting at least one polarizer at least partially, preferably partially spatially, temporally or spatio-temporally, with at least one reducing agent. In this embodiment of the invention the stepped or continuous gradient of polarization is produced by a respectively stepped or continuous gradient of bleached or colorless polarizing agent in said polarizer.

The stepped or continuous gradient of polarization can also be produced by a combination of an increased leaching of the reduced polarizing agent as well as an increased bleaching.

According to another embodiment of the invention the method additionally comprises a step (c) of contacting said at least one polarizer obtained in step (b) with a solvent or solvent mixture and removing at least partially said at least one reduced polarizing agent from said at least one polarizer and providing a polarizer having a stepped or continuous gradient of polarization.

The solvent can be water, an aqueous organic solvent or an organic solvent.

According to a preferred embodiment the solvent is water having preferably a temperature in a range from 25°C to 75°C, further preferred from 40°C to 70°C, still further preferred from 50°C to 68°C, still further preferred from 60°C to 65°C, still further preferred from 61°C to 65°C.

The organic solvent is preferably selected from the group consisting of methanol, ethanol, n-propanol, isopropanol, diethylether, di-n-propylether, diisopropylether toluene, chloroform, and mixtures thereof. Of course, other organic solvents can be used as well, provided that these solvents are capable to dissolve the reduced polarizing agent appropriately.

The rate and extent of reducing or bleaching the polarizing agent(s), in particular dichroic dye(s), with the at least one reducing agent can be controlled by varying the type and concentration of the reducing agent(s), the temperature of the solvent, preferably water, and optionally of the pH. The reducing or bleaching can be effected at pH 7. However, during the chemical reduction, preferably, a basic pH is selected, preferably in a range from pH 8 to 13, further preferred from pH 9 to 12, further preferred from pH 10 to 11. As pH controlling agent sodium carbonate is particularly useful according to the invention. Of course, other basic compounds, such as NaOH or KOH, may be used as well in order to control the pH.

According to a preferred embodiment of the invention sodium dithionite is used as reducing agent and sodium carbonate as pH controlling agent.

The rate and extent of leaching of the reduced polarizing agent(s), in particular the reduced dichroic dye(s), from the polarizer, preferably, polarizing film, can be controlled by temperature of the solvent, preferably water, the pH of the solvent, as and/or by agitation of the solvent. According to a preferred embodiment of the invention, the conditions of leaching are similar, preferably identical, to the conditions of bleaching.

The rate of bleaching and/or leaching can be improved by adding additives such as surfactants, levelling additives, dye affinity additives, etc. to the solvent of bleaching step and/or leaching step.

The leaching of the reduced polarizing agent(s), preferably reduced dichroic dye(s), can be effected before or after shaping the polarizer, particularly polarizing film, into a desired shape, for example, a curved shaped.

According to another embodiment of the invention the dissolving power of a solvent or solvent mixture used is larger for the reduced polarizing agent(s) compared to the unreduced polarizing agent(s). According to an embodiment of the invention, the dissolved amount of the reduced polarizing agent(s) is at least 1.5 times of the amount of the dissolved unreduced polarizing agent(s) in a solvent or solvent mixture. Preferably, the dissolving power of the solvent regarding reduced polarizing agent(s) is at least 2.0 times, at least 2.5 times, at least 3.0 times, at least 3.5 times, at least 4.0 times, at least 4.5 times, at least 5.0 times, and most preferably at least 10.0 times of the dissolving power of said solvent or solvent mixture for the unreduced polarizing agent(s).

According to another embodiment of the invention the at least one polarizer is an element of area, preferably a polarizing film.

The total thickness of the at least one polarizer, preferably polarizing film, is preferably within a range of from 70 µm to 350 µm, preferably from 80 µm to 320 µm, further preferably from 85 µm to 300 µm and still further preferably from 90 µm to 290 µm. The at least polarizer, preferably polarizing film, can be a monolayer or multilayer. The at least one polarizer can be laminated on one or both surfaces, i.e. upper and/or lower surface, of a transparent supporting layer.

According to a preferred embodiment of the invention, the at least one polarizer is preferably a multi-layer polarizing film. According to an embodiment, the polarizer, preferably polarizing film, is a five-layer film having the following structure: "substrate containing a polarizing agent/adhesion layer/supporting layer/adhesion layer/ substrate containing a polarizing agent".

The transparent supporting layer of the multi-layer polarizing element of area, preferably a polarizing film, can provide additional mechanical stability to the polarizer. The increased mechanical stability is advantageous during the manufacture of the polarizing film, for example during handling, and for the further production of an optical lens, preferably a spectacle lens.

The transparent supporting layer also improves significantly the dimensional stability regarding the bleaching and/or leaching using solvent and optionally also heat. Therefore, when leaching the at least one reduced polarizing agent, preferably reduced dichroic dye(s), with solvent, such as water having, e.g., a higher temperature, the polarizer laminated to said transparent supporting layer does not change its configuration or shape. For example, when the at least one polarizer laminated to said transparent supporting layer has a curved shape, the curved shape is maintained, also when contacting the polarizer with hot water for the leaching process.

The transparent supporting layer can be laminated only on one surface or on both surfaces with a polarizer, preferably a polarizing film.

Due to the increased dimensional stability by laminating the polarizer, preferably polarizing film, on a transparent supporting layer, the bleaching process, i.e., the contacting of the polarizer with at least one reducing agent, can be effected under harsher conditions, e.g., in the presence of alkali compounds, without deforming the polarizer.

Due to the increased dimensional stability by laminating the polarizer, preferably polarizing film, on a transparent supporting layer, also the leaching process, i.e., the contacting of the polarizer, comprising reduced polarizing agent(s), with solvent, can be effected under harsher conditions, such as under heat, movement, etc., without deforming the polarizer.

According to a preferred embodiment of the invention the polarizer, preferably polarizing film, is or comprises a symmetrical multilayer structure. Preferably, the supporting layer is arranged centrally wherein one polarizing film is applied on both surfaces of the supporting layer: "polarizing film/supporting layer/polarizing film". According to this embodiment the polarizer is or comprises a symmetrical multilayer structure having three layers.

The polarizer, preferably polarizing film, may be laminated to the transparent supporting layer using an adhesion layer between the polarizer and the transparent supporting layer. If the polarizer is self-adhesive, the polarizer may be directly laminated on one or both sides of a transparent supporting layer. According to another embodiment of the invention, the polarizer is laminated to one or both surfaces of the transparent supporting layer wherein between each polarizer and the supporting layer, preferably one adhesion layer, is located.

According to another preferred embodiment of the invention the polarizer, preferably polarizing film, is or comprises a symmetrical multilayer structure of five layers. Preferably, the supporting layer is arranged centrally wherein an adhesion layer is applied on each of the two surfaces of the supporting layer. A polarizing film is in turn arranged on each adhesion layer resulting in a five layer structure: "polarizing film/adhesion layer/supporting layer/adhesion layer/polarizing film".

A symmetrical multilayer structure has a superior dimensional stability during the bleaching and/or leaching step.

The transparent supporting layer is selected from a transparent polymer, preferably from cellulose based polymers such as diacetylcellulose, triacetylcellulose (TAC) or cellulose acetate butyrate (CAB).

According to another preferred embodiment of the invention, said transparent supporting layer comprises at least one transparent polymer selected from the group consisting of cellulose-based polymers, polycarbonate (PC) based polymers, polyester based polymers, acrylate-based polymers, methacrylate-based polymers, polythiourethane based polymers, vinyl-based polymers, styrene-based polymers, olefin-based polymers, amide-based polymers, polyether imide-based polymers, polysulfone-based polymers, polyether sulfone-based polymers, polyether ether ketone-based polymers, polyphenylene sulfide based polymers, polyoxymethylene-based polymers, epoxy-based polymers, combinations and mixtures thereof.

The transparent polymer may also be selected from the group consisting of polycarbonate (PC) based polymers; polyester based polymers such as polyethylene terephthalate (PET), polyethylene terephthalate glycol (PETG) and polyethylene naphthalate; dimethyl terephthalate (DMT); acrylate based polymers such as polymethacrylate (PMA), polyethylacrylate; methacrylate polymers such as polymethyl methacrylate (PMMA), polyethyl methylacrylate; thermoplastic urethane polymers (TPU); polythiourethane based polymers; vinyl based polymers such polyvinyl chloride, polyvinyl alcohol, polyvinylidene chloride, polyvinyl butyral; styrene based polymers such as polystyrene, styrene methylmethacrylate copolymers (SMMA), styrene maleic anhydride polymers (SMA), acrylonitrile-styrene (ANS) copolymers, acrylonitrile butadiene styrene (ABS) terpolymers, (meth)acrylate butadiene styrene (MBS) terpolymers; olefin based polymers such as polyethylene, polypropylene, polymethylpentene (PMP), cyclic (COC) or norboraene structure-containing polyolefins, and ethylene-propylene copolymers; amide based polymers such as nylon and aromatic polyamides; imide based polymers; polyether imide based polymers; polysulfone based polymers; polyther sulfone based polymers; polyether ether ketone based polymers; polyphenylene sulfide based polymers; polyoxymethylene based polymers; and epoxy based polymers, or any blend thereof. In a preferred embodiment, the at least one transparent supporting layer is selected from the group consisting of triacetyl cellulose (TAC), polycarbonate (PC), cellulose acetate butyrate (CAB), polymethyl methacrylate (PMMA), polyethylene terephthalate (PET) and combinations and mixtures thereof.

In a particularly preferred form, the at least one transparent support layer is selected from the group consisting of TAC, PET, PC, and combinations and mixtures thereof.

According to a very preferred embodiment of the invention the transparent supporting layer is TAC. TAC has been shown to provide extraordinary dimensional stability to the at least one polarizer.

According to a preferred embodiment of the invention the polarizer, preferably polarizing film, has the following multilayer structure: PVA/TAC/PVA, wherein one or both PVA layers (PVA: polyvinyl alcohol), preferably stretched PVA layers, comprise(s) stepped or continuous, preferably a continuous gradient of polarization, using preferably dichroic dye(s) as polarizing agent(s).

According to a preferred embodiment of the invention the polarizer, preferably polarizing film, has the following symmetrical three layer structure: PVA/TAC/PVA, wherein both PVA layers (PVA: polyvinyl alcohol), preferably stretched PVA layers, comprise(s) stepped or continuous, preferably a continuous gradient of polarization, using preferably dichroic dye(s) as polarizing agent(s).

According to another particularly preferred embodiment of the invention the polarizer, preferably polarizing film, has the following symmetrical five layer structure: "PVA/PVA-adhesive/TAC/PVA-adhesive/PVA", wherein the both outermost PVA layers (PVA: polyvinyl alcohol), preferably stretched PVA layers, comprise a stepped or continuous, preferably a continuous gradient of polarization, using preferably dichroic dye(s) as polarizing agent(s). The "PVA-adhesive"-layer is an adhesion layer of PVA adhering the polarizing outermost PVA-layers and the supporting layer to each other.

Preferably, the polymers usable as transparent supporting layer have high optical clarity and bond well with polyvinyl alcohol-type polarizing layers.

The at least one polarizer, preferably polarizing film, can also be laminated with protective layers as the outermost layers. These protective layers are preferably removable.

According to another embodiment of the invention the at least one polarizing agent is selected from the group consisting of dichroic dye(s), iodine and combinations thereof.

According to the preferred embodiment the dichroic dye(s) is/are at least one azo dye.

Preferred dichroic dyes, according to the invention, comprise at least one of the functionally groups: an azo-compound bearing a functionally group R-N=N-R'-, wherein R and R'- can be independently from each other either aryl or alkyl; a naphtha compound or an anthraquinone compound. Non-limiting examples include: C.I. Direct Blue 67, C.I. Direct Blue 90, C.I. Direct Blue 200, C.I. Direct Green 59, C.I. Direct Violet 48, C.I. Direct Red 39, C.I. Direct Red 81, C.I. Direct Red 83, C.I. Direct Red 89, C.I. Direct Orange 39, C.I. Direct Orange 72, C.I. Direct Yellow 34, C.I. Direct Green 26, C.I. Direct Green 27, C.I. Direct Green 28, C.I. Direct Green 51, C.I. Direct Black 170, and combinations and mixtures thereof.

According to another embodiment of the invention, C.I. Direct Yellow 28, C.I. Direct Yellow 44, C.I. Direct Orange 26, C.I. Direct Orange 39, C.I. Direct Orange 107, C.I. Direct Red 20, C.I. Direct Red 31, C.I. Direct Red 79, C.I. Direct Red 81, C.I. Direct Red 247, C.I. Direct Green 80, C.I. Direct Green 59, and combinations and mixtures thereof, can be used.

The aforementioned dye stuffs can be used as free acids, or alkali metal salts, for example, Na-salts, K-salts, Li-Salts, ammonium salts and salts of amines, and combinations thereof.

According to another embodiment of the invention said dichroic dye(s) is/are rendered substantially colorless, preferably colorless, when reducing said dichroic dye(s) with said at least one reducing agent in step (b) of the method of the invention.

According to another embodiment of the invention, the reducing agent is selected from the group consisting of dithionite containing agents, e.g., salts of dithionite such as sodium dithionite, potassium dithionite, zinc dithionite; sulfinic acid derivatives such as formamidine sulfinic acid; salts of sulfinic acids such as sodium salts of sulfinic acid, potassium salts of sulfinic acid; salts of hydroxymethane sulfinate such as sodium hydroxymethane sulfinate, potassium hydroxymethane sulfinate; calcium hydroxymethane sulfinate, zinc hydroxymethane sulfinate; sulfonic acid derivatives, e.g., amino(imino)methanesulfonic acid, salts of sulfonic acid such as sodium salt of sulfonic acid; salts of hydrogen sulfite, such as sodium bisulfite, potassium bisulfite; and mixtures thereof.

According to a preferred embodiment of the invention dithionite containing agents, e.g., salts of dithionite such as sodium dithionite, potassium dithionite, zinc dithionite are used as reducing agent. Particularly preferred, sodium dithionite is used as reducing agent.

The aforementioned reducing agents are effective to reduce the polarizing agent, in particular the preferred dichroic dye(s), more preferably dichroic dye(s) comprising preferably at least one azo dye.

According to another embodiment of the invention, the substrate of the polarizer, preferably a polarizing film, consists of or comprises at least one polymer of the group consisting of polyvinyl alcohol or a derivative thereof, a polyene type obtained by dehydrochlorinating of a polyvinyl chloride or by dehydrating of polyvinyl alcohol to produce polyene, and mixtures and combinations thereof. Preferably, the substrate of the polarizer is a stretched film, preferably a stretched PVA film.

A polarizing film suitable for the present invention can be produced as follow. The substrate of polarizing film, such as a stretched and oriented film of polyvinyl alcohol or a derivative thereof or a polyene type film obtained by dehydrochlorinating a polyvinyl chloride film or dehydrating a polyvinyl alcohol film to produce polyene, followed by orientation, is dyed or incorporated with iodine and/or a dichroic dye as a polarizing agent, thereby obtaining a polarizing film. Iodine-type polarizing films have a superior initial polarizing performance, but are weak against water and heat, and have a problem in endurance in case they are used for a long period of time in the state of high temperature and high humidity. In order to improve the endurance, the films can be treated with formalin or an aqueous solution containing boric acid or to additionally use a polymeric film of low moisture permeability as a protective film.

The dye-type polarizing films which use dichromatic dye(s) as polarizing agent are better in moisture resistance and heat resistance compared to iodine-type polarizing films.

Therefore, dye-type polarizing films using dichromatic dye(s) as polarizing agent(s) are preferred as polarizers.

A polarizer, preferably a polarizing film having a stepped or continuous gradient of polarization obtained or obtainable according to the method of any one of claims 1 to 11 can be used in a method for producing an optical lens, preferably a spectacle lens, comprising the step of arranging a polarizer, preferably a polarizing film, having a stepped or continuous gradient of polarization, on or in an optical lens or optical lens body, preferably a spectacle lens, still further preferably a high refractive index spectacle lens.

The optical lens according to the invention is preferably a polarizing spectacle lens having a continuous or stepped gradient of polarization.

A high refractive index is preferably a refractive index of n>1.515, particularly preferably of n>1.520 and still particularly preferably of n>1.533. A high refractive index, polarized spectacle lens may have vision correction properties or not.

The polarizer, preferably a polarizing film, having a stepped or continuous gradient of polarization may be applied to one surface or both surfaces of an optical lens, preferably a spectacle lens. According to a preferred embodiment of the invention, an adhesion layer is arranged between the optical lens body and the polarizer, preferably polarizing film.

The adhesion layer preferably comprise a polyvinyl alcohol-type layer selected from the group consisting of polyvinyl alcohol (PVA), polyvinyl formal (PVF), polyvinyl acetate (PVAc), a saponified (ethylene/vinyl acetate) copolymer, and mixtures thereof.

The adhesion layer is preferably a layer of PVA, which may have polarizing properties.

An adhesion layer may either be a polarizing adhesion layer or a non-polarizing adhesion layer.

According to another embodiment of the invention, the adhesion layer is a non-polarizing adhesion layer. For example, a polyurethane adhesive such as thermal or UV curable glue, a hot melt adhesive (HMA), or a pressure sensitive adhesive (PAS) may be used as non-polarizing adhesion layer.

The adhesion layer may be UV-curable, heat curable or UV- and heat curable.

The aforementioned adhesion layer(s) can be used to adhere the polarizer, preferably polarizing film, to the optical lens body, preferably of a spectacle lens. This/these adhesion layer(s) can also be used to adhere the polarizer(s), e.g., polarizing film(s) to a supporting layer within a multilayer polarizing film.

It is of course possible to make use of different types of adhesion layers within a multilayer polarizing film. The adhesion layers may be of different chemical composition, e.g., a PVA layer and a PVAc layer. It is also possible to make use of a polarizing adhesion layer, which may also contain dichroic dye(s), and a non-polarizing adhesion layer within a multilayer polarizing film.

The material of the optical lens body is preferably selected from the group consisting of polyurethanes, such as urethane and thiourethane polymers and copolymers, episulfides, halogen substituted derivatives of bisphenol-A, and aromatic (meth)acrylic copolymers.

In a preferred embodiment, the optical lens body is made from a high refractive index material such as polyurethane, preferably a urethane or thiourethane polymer or copolymer.

The method for producing an optical lens, preferably a spectacle lens, still preferably a polarized spectacle lens, can comprise the step of injection molding of a liquid monomer into a lens casting assembly or lens mold, e.g., of an injecting molding machine.

The polarizer, preferably a polarizing film, having a stepped or continuous gradient of polarization can be arranged in that casting assembly or lens mold which is to be filled with the monomer to form the optical lens, preferably high refractive index optical lens.

If the polarizer, preferably polarizing film, is arranged on one or both surfaces of the optical lens, the optical lens of the invention can be produced by back injection molding. That is to say the polarizer, preferably a polarizing film, having a stepped or continuous gradient of polarization is arranged in a mold for an optical lens and the liquid monomer of the optical lens body is back injected in an injection molding machine. The polarizer, preferably polarizing film, can be arranged in one half or in each of the two halves of the mold and in contact with the surface of each mold, respectively, and then the liquid monomer of the lens body is injected.

According to another embodiment of the invention, the polarizer, preferably polarizing film, is arranged within the mold so that the monomer injected into the mold by an injection molding process flows around the polarizing film, covering both sides of the polarizing film to completely fill the mold. In this embodiment of the inventive method, the polarizer, preferably a polarizing film, having a stepped or continuous gradient of polarization is arranged within the optical lens, i.e. not on one or both surface(s) of the optical lens body.

The polarizer, preferably polarizing film, having a stepped or continuous gradient of polarization can be arranged in a shaped form, for example a curved shape in the mold of the optical lens body. When proceeding in this way, the polarizing film can be arranged in a curved shape within an optical lens body. The curved shape of the polarizer, preferably polarizing film, can be harmonized with the curvature of the optical lens.

A particular advantage of the present invention is that the method for producing a polarizer, preferably a polarizing film, having a stepped or continuous gradient of polarization, can be effected on a flat polarizer as well as on a curved polarizer.

According to a preferred embodiment of the invention, the polarizer, preferably the polarizing film, is first shaped into the desired curve before contacting the curved polarizer, preferably curved polarizing film, at least partially with at least one reducing agent, i.e. before the bleaching step and/or leaching step.

If the shaping of the polarizer, preferably the polarizing film, is carried out after the stepped or continuous gradient of polarization has been created, a distortion of the gradient may happen. Therefore, if the polarizer, preferably polarizing film, is to be used in a curved shape it is preferred to first shape the polarizer, preferably polarizing film, into the desired curvature and then to carry out the method of the invention, i.e. contacting the curved polarizer with at least one reducing agent, in order to avoid any distortion of the gradient.

If the polarizer, preferably polarizing film, is already arranged on the surface of the lens body, the inventive method can likewise be carried out by contacting the polarizer, arranged on one or both surfaces of the lens body, at least partially with at least one reducing agent as described above. The method as described above for creating a continuous or stepped gradient can be carried out respectively on a polarizer, preferably polarizing film, already arranged or attached to the surface of an optical lens body, particularly spectacle lens body.

According to an embodiment of the invention, the polarizer, preferably polarizing film, can be arranged on one or both surfaces of an optical lens body. The polarizer, preferably polarizing film, can also be arranged within an optical lens body, preferably in a curved shape which may harmonize with the curvature of the optical lens. It is of course possible to arrange a polarizer, preferably polarizing film, having a stepped or continuous gradient of polarization on one surface of the lens body and additionally to arrange a polarizer, preferably a polarizing film, having a stepped or continuous gradient of polarization, within said optical lens body. According to another embodiment of the invention, the polarizer, preferably a polarizing film, having a stepped or continuous gradient of polarization is arranged on both surfaces of an optical lens body, wherein additionally a third polarizer, preferably polarizing film, having a stepped or continuous gradient of polarization is arranged with said optical lens body.

The optical lens of the invention is preferably a spectacle lens. According to another embodiment of the invention, the optical lens is not a contact lens.

The optical lens, preferably spectacle lens, preferably polarizing spectacle lens, of the invention is further characterized in that the polarizer comprises at least one polarizing agent in or on a substrate of said polarizer, wherein the at least one polarizing agent is present both as a reduced polarizing agent, preferably reduced dichroic dye(s), and as unreduced polarizing agent, preferably unreduced dichroic dye(s), in or on said substrate.

The at least reduced polarizing agent, preferably dichroic dye(s), may only be present in a range of about 10 wt.-% to 0.01 wt.-%, such as 6 wt.-% to 0.05 wt.-%, or 4 wt.-% to 0.1 wt.-%, or 2 wt.-% to 0.5 wt.-%, based on the total weight of unreduced and reduced polarizing agent present in the polarizer, preferably polarizing film. The at least one reduced polarizing agent, preferably dichroic dye(s), may be still present due to incomplete removal, for example, when contacting the polarizer during or after the step of reducing of the at least one polarizing agent with a solvent.

If the at least one polarizing agent, preferably dichroic dye(s), has less or no polarizing properties after chemical reduction, and is preferably colorless, the colorless reduced polarizing agent, preferably reduced dichroic dye(s), may be present in a significant amount in the optical lens of the invention.

That is to say, the optical lens of the present invention is characterized by the method of producing the same.

Therefore, the invention is also directed to an optical lens, preferably a spectacle lens, obtainable or obtained by a method according to claim 12.

The invention is also directed to a spectacle, preferably a polarized spectacle, comprising an optical lens according to any one of claims 13 to 15. The spectacle, preferably polarized spectacle, is preferably sunglasses.

### Figures

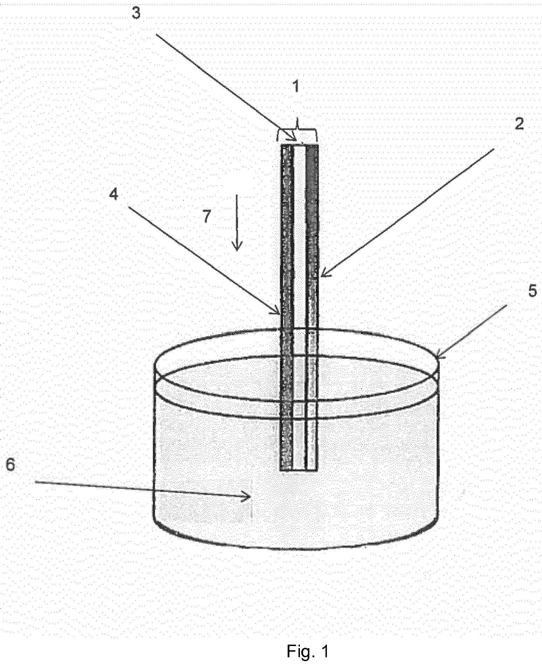

Figure 1 shows a polarizer which is a multilayer 1 made up of a polarized film 2 laminated to a supporting film 4 by an adhesion layer 3. The supporting layer 4 can be TAC or PET, preferably TAC. The adhesion layer 3 can be a PVA film. The polarizing film 2 is a stretched PVA layer containing dichroic dye(s). The multilayer 1 is immersed into a container 5 containing the bleaching and leaching solution, for example, 63°C hot water further containing a reducing agent such as sodium dithionite and a pH controlling agent such as sodium carbonate. The multilayer 1 can be immersed with continuously increased immersion depth into the bleaching and leaching solution in the direction of the arrow 7. Although the direction of movement of the multilayer 1 is indicated by the arrow 7 to be perpendicular to the surface of the hot water containing a reducing agent, the direction of movement can also be inclined relative to the surface of the hot water containing a reducing agent. The multilayer 1 can be removed from the bleaching and leaching solution at once or also continuously by removing the multilayer 1 by and by in the opposite direction of arrow 7.
   Although not shown in Fig. 1, most preferably the polarizer has a symmetrical multilayer structure of 5 layers: "polarizing film 2/adhesion layer 3/supporting layer 4/adhesion layer 3/polarizing film 2", wherein the polarizing films 2 are preferably stretched polyvinyl layers containing dichroic dye(s), the adhesion layers 3 are preferably PVA, and the supporting film 4 is preferably TAC or PET, preferably TAC.
   The longer and deeper the multilayer 1 or a multilayer structure of five layers (not shown) is immersed into the hot water containing a reducing agent, the more dichroic dye(s) is/are reduced and following this removed from the polarized film(s) 2. The respectively reduced dichroic dye(s) is/are removed continuously thus creating a continuous gradient of dichroic dye(s), i.e. a continuous gradient of polarization in the polarizing film(s) 2.

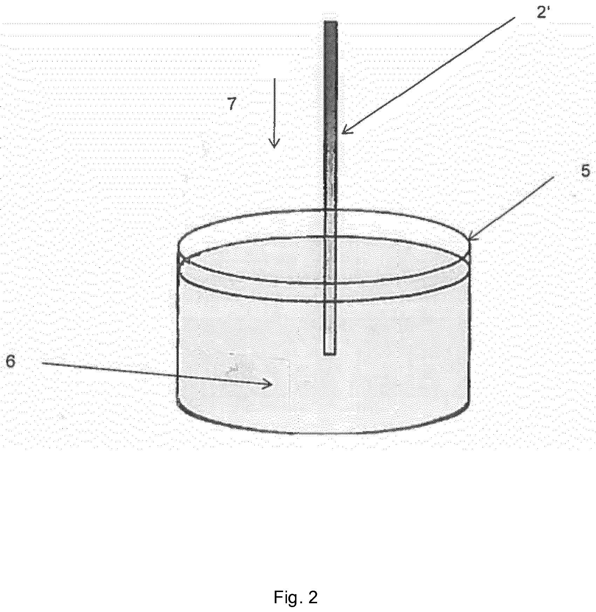

Figure 2 shows a similar arrangement as in Fig. 1, wherein, however, the polarizer is a monolayer 2'. The monolayer 2' can be made up of a PVA layer containing dichroic dye(s). The monolayer 2' is immersed into a container 5 containing the bleaching and leaching solution, for example, 63°C hot water further containing a reducing agent such as sodium dithionite and a pH controlling agent such as sodium carbonate. The monolayer 2' can be immersed with continuously increased immersion depth into the bleaching and/or leaching solution in the direction of the arrow 7. Although the direction of movement of the monolayer 2'is indicated by the arrow 7 to be perpendicular to the surface of the hot water containing a reducing agent, the direction of movement can also be inclined relative to the surface of the hot water containing a reducing agent. The monolayer 2' can be removed from the bleaching and leaching solution at once or continuously by removing the monolayer 2' by and by in the opposite direction of arrow 7.
   The longer and deeper the monolayer 2' is immersed into the hot water containing a reducing agent, the more dichroic dye(s) is/are reduced and following this removed from the monolayer 2'. The respectively reduced dichroic dye(s) is/are removed continuously thus creating a continuous gradient of dichroic dye(s), i.e. a continuous gradient of polarization in the monolayer 2'.
Figure 3 shows a photograph of a bleached/leached five-layer polarizer having the structure PVA/TAC/PVA, wherein between each PVA-TAC interface an adhesion layer is arranged. As reducing agent sodium dithionite was used.
Figure 4 shows a photograph of a bleached/leached five-layer polarizer having the structure PVA/TAC/PVA, wherein between each PVA-TAC interface an adhesion layer is arranged. As reducing agent amino(imino)methanesulfonic acid was used.

### Examples

### Example 1

A PVA/TAC/PVA film was produced by laminating a stretched PVA layer (Triapex Co., Ltd, South Korea) having a thickness of 30 µm on a TAC-layer (Triapex Co., Ltd, South Korea) having a thickness of 240 µm each via an UV-curable adhesive layer (Triapex Co., Ltd, South Korea) having a thickness of 5 µm. The resulting five layer film had a total thickness of 310 µm.

Each PVA layer was homogeneously dyed with the dichroic dye Direct Black 170 (Aakash Chemicals, USA) by immersing the PVA films completely into a dyeing solution.

### Example 2

A polarizing five layer film obtained in Example 1 was cut into a sample of an octagonal shape having a maximum diameter of 110 mm, and then treated at a temperature of 63°C with a bleaching/leaching solution containing in 6l water 4g Na₂S₂O₄ at pH 9. The pH 9 was adjusted by adding KOH. The polarizing film was immersed with an increasing immersion depth of 600 mm/min into the bleaching/leaching solution. After 15 min the sample was completely withdrawn from the bleaching/leaching solution, washed with water and dried at a temperature of 20°C.

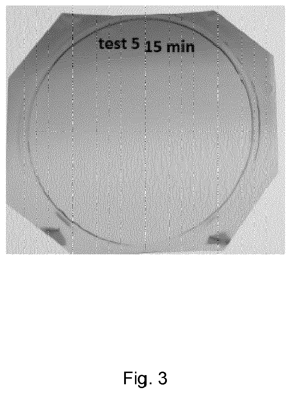

The gradient of polarization was measured using a spectrophotometer (PerkinElmer, Inc., USA). The lightest point (bottom) showed a polarization of 47.14%, the center of 97.20%, and the top point a polarization of 98.48 % polarization. Fig. 3 shows the result (labelled with "test 5 15 min").

### Example 3

A polarizing five layer film obtained in Example 1 was cut into a sample of an octagonal shape having a maximum diameter of 110 mm, and then treated at a temperature of 65°C with a bleaching/leaching solution containing in 6l water 5g amino(imino)methanesulfonic acid (Reduxin 796, Daykem s.r.l., Italy), 0.5 g levelling agent (Novalene 110, Daykem s.r.l., Italy), at pH 10.3. The pH 10.3 was adjusted by adding 25 g Na₂CO₃. The polarizing film was immersed with an increasing immersion depth of 10 mm/min into the bleaching/leaching solution. After 15 min the sample was completely withdrawn from the bleaching/leaching solution, washed with water and dried at a temperature of 20°C.

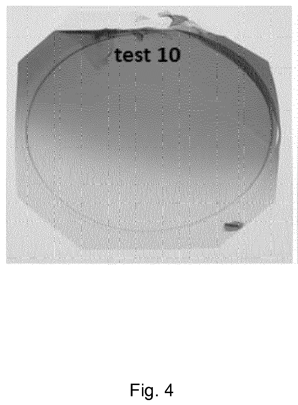

The gradient of polarization was measured using a spectrophotometer (PerkinElmer, Inc., USA). The lightest point (bottom) showed a polarization of 15.27 %, the center of 86.97%, and the top point a polarization of 97.12 % polarization. Fig. 4 shows the result (labelled with "test 10").

## Claims

1. Method for producing a polarizer having a stepped or continuous gradient of polarization, said method comprising the following steps:
(a) providing at least one polarizer comprising a substrate and at least one polarizing agent,
(b) contacting said at least one polarizer at least partially with at least one reducing agent, said at least one reducing agent being reactive with said at least one polarizing agent to provide at least one reduced polarizing agent.

2. Method according to claim 1,
**characterized in that,**
in step (b)
(i) said at least one reduced polarizing agent has a higher solubility in a solvent compared to an unreduced polarizing agent in said solvent, and/or
(ii) said at least one reduced polarizing agent has less or no polarizing properties compared to an unreduced polarizing agent.

3. Method according to claim 1 or 2,
**characterized in that,**
said method further comprises the step of:
(c) contacting said at least one polarizer obtained in step (b) with a solvent and removing at least partially said at least one reduced polarizing agent from said at least one polarizer and providing a polarizer having a stepped or continuous gradient of polarization.

4. Method according to any one of claims 1 to 3,
**characterized in that,**
said at least one polarizer is laminated to at least one side of at least one transparent supporting layer or said at least one polarizer is laminated to both sides of at least one transparent supporting layer.

5. Method according to any one of previous claims,
**characterized in that,**
said at least one polarizing agent is selected from the group consisting of dichroic dye(s) and mixtures thereof.

6. Method according to claim 5,
**characterized in that,**
said dichroic dye(s) is/are at least one azo dye.

7. Method according to any one of claims 5 or 6,
**characterized in that,**
said dichroic dye(s) is/are rendered colorless when reducing said dichroic dye(s) with said reducing agent in step (b).

8. Method according to any one of claims 1 to 7,
**characterized in that,**
said reducing agent is selected from the group consisting of dithionite containing agents, such as salts of dithionite such as sodium dithionite, potassium dithionite, zinc dithionite; sulfinic acid derivatives such as formamidine sulfinic acid; salts of sulfinic acids such as sodium salts of sulfinic acid, potassium salts of sulfinic acid; salts of hydroxymethane sulfinate such as sodium hydroxymethane sulfinate, potassium hydroxymethane sulfinate; calcium hydroxymethane sulfinate, zinc hydroxymethane sulfinate; sulfonic acid derivatives such as amino(imino)methanesulfonic acid, salts of sulfonic acid such as sodium salt of sulfonic acid; salts of hydrogen sulfite, such as sodium bisulfite, potassium bisulfite; and mixtures thereof.

9. Method according to any one of claims 1 to 8,
**characterized in that,**
said substrate consists of or comprises at least one polymer of the group consisting of polyvinyl alcohol or a derivative thereof, a polyene type obtained by dehydrochlorinating of a polyvinyl chloride or by dehydrating of polyvinyl alcohol to produce polyene, and mixtures and combinations thereof.

10. Method according to any one of previous claims,
**characterized in that,**
said at least one polarizer is a polarizing film.

11. Method according to any one of claims 4 to 10,
**characterized in that,**
said transparent supporting layer comprises at least one transparent polymer selected from the group consisting of cellulose based polymers, polycarbonate based polymers, polyester based polymers, acrylate based polymers, methacrylate based polymers, polythiourethane based polymers, vinyl based polymers, styrene based polymers, olefin based polymers, amide based polymers, polyether imide based polymers, polysulfone based polymers, polyether sulfone based polymers, polyether ether ketone based polymers, polyphenylene sulfide based polymers, polyoxymethylene based polymers, epoxy based polymers, combinations and mixtures thereof.

12. Method for producing an optical lens, preferably a spectacle lens,
**characterized in that,**
a polarizer having a stepped or continuous gradient of polarization obtained according to the method of any one of claims 1 to 11 is arranged on or in an optical lens, preferably a spectacle lens.

13. An optical lens, preferably a spectacle lens, comprising at least one polarizer having a stepped or continuous gradient of polarization,
**characterized in that,**
said polarizer comprises at least one polarizing agent in or on a substrate, wherein said at least one polarizing agent is present both as a reduced polarizing agent and as unreduced polarizing agent in or on said substrate.

14. An optical lens, preferably a spectacle lens according to claims 13 ,
**characterized in that,**
said at least one polarizer is laminated to at least one side of at least one transparent supporting layer or said at least one polarizer is laminated to both sides of at least one transparent supporting layer.

15. An optical lens according to claim 13 or 14,
**characterized in that,**
said reduced polarizing agent has less or no polarizing properties and is preferably colorless.
